(19) **Europäisches Patentamt / European Patent Office / Office européen des brevets**

(11) **EP 2 003 585 A2**

(12) **EUROPEAN PATENT APPLICATION**

(43) Date of publication:
**17.12.2008 Bulletin 2008/51**

(51) Int Cl.:
***G06F 21/00*** (2006.01)

(21) Application number: **08156049.2**

(22) Date of filing: **12.05.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **13.06.2007 KR 20070057602**

(71) Applicant: **Samsung Electronics Co., Ltd.**
**Suwon-si,**
**Gyeonggi-do 442-742 (KR)**

(72) Inventors:
• **Kim, Hyoung-Shick**
**Suwon-si, Gyeonggi-do (KR)**

• **Kwon, Won-Seok**
**Suwon-si, Gyeonggi-do (KR)**
• **Kang, Bo-Gyeong**
**Seoul (KR)**
• **Park, Kyung-Mo**
**Seoul (KR)**

(74) Representative: **Davies, Robert Ean**
**Appleyard Lees**
**15 Clare Road**
**Halifax**
**Yorkshire HX1 2HY (GB)**

(54) **Method, apparatus and system for managing A/V profiles**

(57)     A method, apparatus and system for managing A/V (Audio/Video) profiles are provided, which is related to a technology that supports different profiles in a domain. The method of managing A/V profiles includes requesting a license component (S610) and an encrypted content component, and creating (S640) a DRM license and encrypted content by gathering elements that correspond to an A/V profile of a specified device from the license component and the encrypted content component.

**FIG. 6**

**Description**

Methods, apparatuses and systems consistent with the present invention relate to managing A/V (Audio/Video) profiles, and, more particularly, to a technology that supports different profiles in a domain.

Recently, digital rights management (hereinafter referred to as "DRM") has been actively researched, and commercial services using DRM have already been implemented and more will be implemented. The basic concept of DRM is to protect digital content, which can be easily copied and distributed.

Some efforts have been made to protect digital content. Conventionally, digital content protection has concentrated on preventing access to digital content without permission, by, for example, allowing only those people who have paid charges to access the digital content.

However, due to the characteristics of digital data, digital content can be readily copied without loss, so that it can be reused, processed and distributed to third parties. Accordingly, when a person who has paid accesses the digital content and intentionally distributes it to a third party, the third party can use the digital content without paying the charges. This causes a number of problems.

In order to solve these problems, in DRM, digital content is encrypted and distributed, and in order to use the encrypted digital content, a license that is called a rights object (RO) is required.

The recent DRM technology has introduced a domain technology, and supports free sharing of DRM content in a user's domain. That is, domain content, after being purchased, can be reproduced in a certain device included in the domain without special constraint and can be transmitted to other devices in the domain.

However, in the case where the devices in the domain share content and DRM licenses in a state that they support different A/V profiles, safety problems may occur with an avoidable increase in transmission rate.

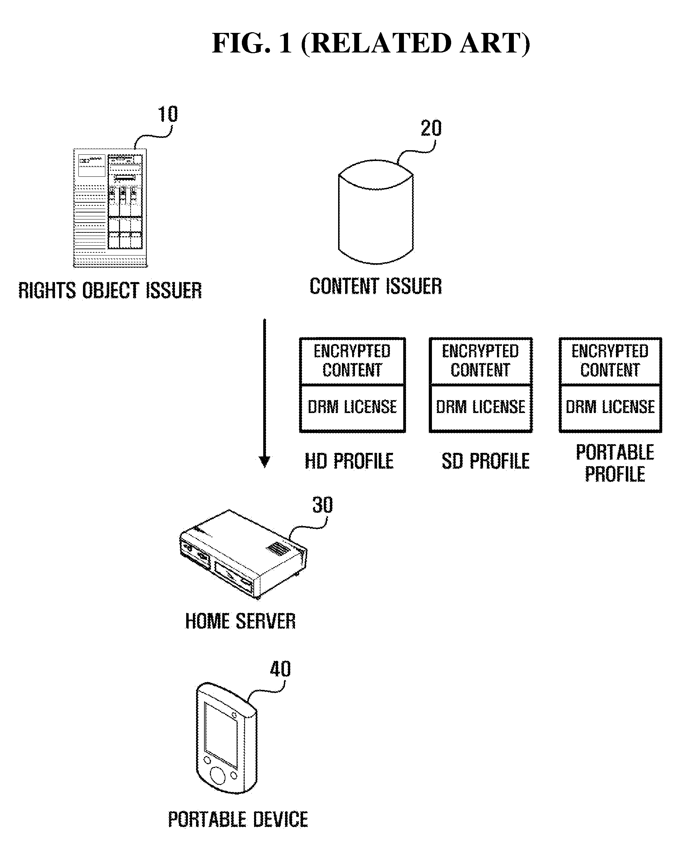

FIG. 1 is a view explaining methods in which a conventional home server downloads all A/V profiles. The methods may include a method in which the home server downloads all pre-designated A/V profiles and a method in which the home server downloads HD (High Definition) profiles and transcodes the downloaded HD profiles into different profiles.

A system that downloads A/V profiles includes a rights object issuer (RI) 10, a content issuer 20, a home server 30, and a portable device 40. Here, it is assumed that the home server 30 supports an HD profile and the portable device 40 supports a portable profile.

First, the content issuer 20 creates encrypted content for all A/V profiles. Then, the rights object issuer 10 creates respective DRM licenses for the corresponding profiles.

The home server 30 downloads the encrypted content and the DRM licenses corresponding to all the A/V profiles from the content issuer 20 and the rights object issuer 10, respectively.

If the portable device 40 requests content transmission from the home server 30, the home server 30 transmits the DRM license and the encrypted content corresponding to the downloaded portable profile to the portable device 40.

In order to support different kinds of profiles, the home server 30 should download even the encrypted content and the DRM licenses for the different profiles that are unnecessary to the home server 30. This increases network use between the DRM rights object issuer 10 and the home server 30 and between the content issuer 20 and the home server 30, and wastes storage space in the home server 30.

In addition, in the case where the home server 30 downloads an HD profile and transcodes the downloaded HD profile into a different profile, a decryption/re-encryption of the encrypted content and a digital signature of the rights object issuer 10 for the DRM license are required, which creates safety problems.

Accordingly, embodiments of the present invention aim to address the above-mentioned problems occurring in the prior art, and aim to safely provide a DRM license and content to a device that supports different profiles in a domain.

Another aim of embodiments of the present invention is to perform a digital signature to safely provide a DRM license and content.

Additional features of the invention will be set forth in part in the description which follows and in part will become apparent to those having ordinary skill in the art upon examination of the following or may be learned from practice of the invention.

According to an aspect of the invention there is provided a method of managing A/V profiles, which includes requesting a license component and an encrypted content component; and creating a DRM license and encrypted content by gathering elements that correspond to an A/V profile of a specified device from the license component and the encrypted content component.

According to another aspect of the present invention, there is provided an apparatus for managing A/V profiles, which comprises: a transmission unit which requests a license component and an encrypted content component from a rights object issuer and a content issuer, respectively; a reception unit which receives the license component and the encrypted content component transmitted in accordance with the request; a content-component-management unit which creates encrypted content by gathering elements that correspond to an A/V profile of a specified device from the transmitted encrypted content component; and a license-component-management unit which creates a DRM license by gathering elements that correspond to the A/V profile of the specified device from the transmitted license component.

In still another aspect of the present invention, there is provided a system for managing A/V profiles, which comprises: a rights object issuer which creates license components in consideration of all A/V profiles supported devices in a domain; a content issuer which creates encrypted content components in consideration of all the A/V profiles supported by the devices in the domain; and a home server, located in the domain, which creates a DRM license and encrypted content by gathering elements that correspond to the A/V profile of a specified device from the created license component and encrypted content component.

For a better understanding of the invention, and to show how embodiments of the same may be carried into effect, reference will now be made, by way of example, to the accompanying diagrammatic drawings in which:

FIG. 1 is a view explaining methods in which a conventional home server downloads all A/V profiles;
FIG. 2 is a view illustrating a system for managing A/V profiles according to an embodiment of the present invention;
FIG. 3 is a view explaining a process in which a content issuer creates encrypted content components according to an embodiment of the present invention;
FIG. 4 is a view explaining a process in which a rights object issuer creates license components according to an embodiment of the present invention;
FIG. 5 is a view explaining a process in which a home server creates DRM licenses and encrypted content corresponding to profiles of respective devices according to an embodiment of the present invention;
FIG. 6 is a flowchart illustrating a method of managing A/V profiles according to an embodiment of the present invention;
FIG. 7 is a block diagram illustrating an internal construction of a home server according to an embodiment of the present invention; and
FIG. 8 is a block diagram illustrating an internal construction of a portable device according to an embodiment of the present invention.

Hereinafter, embodiments of the present invention will be described in detail with reference to the accompanying drawings. The aspects and features of the present invention and methods for achieving the aspects and features will be apparent by referring to the embodiments to be described in detail with reference to the accompanying drawings. However, the present invention is not limited to the embodiments disclosed hereinafter, but can be implemented in diverse forms. The matters defined in the description, such as details of construction and elements, are only provided to assist those of ordinary skill in the art in a comprehensive understanding of the invention, and the present invention is only defined within the scope of the appended claims. In the entire description of the present invention, the same drawing reference numerals are used for the same elements across various figures.

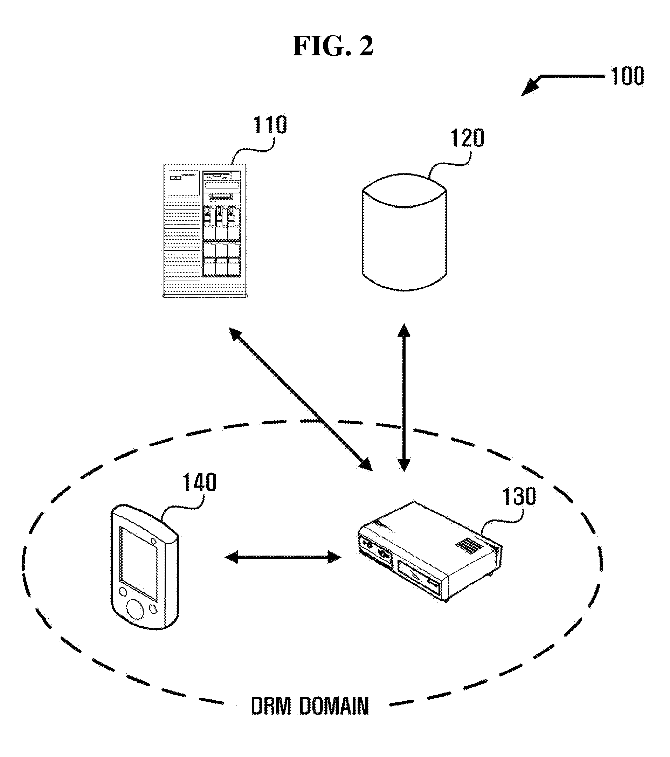

FIG. 2 is a view illustrating a system for managing A/V profiles according to an embodiment of the present invention. The system 100 for managing A/V profiles according to an embodiment of the present invention includes a rights object issuer 110, a content issuer 120, a home server 130, and a portable device 140.

The home server 130 is a device that includes a storage medium such as a hard disk or a flash memory, and can store content objects and DRM licenses. Also, the home server 130 can provide the content object or DRM license stored therein to the portable device 140.

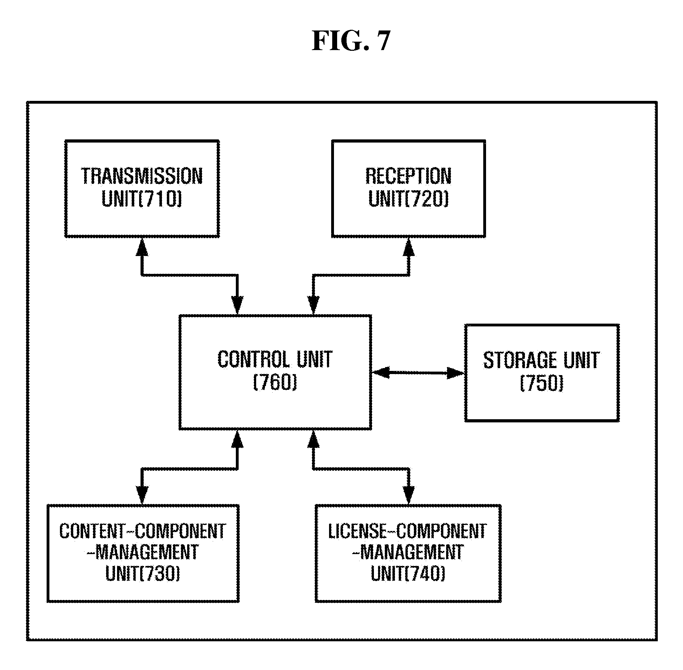

In addition, the home server 130 creates the DRM license and encrypted content by gathering elements that correspond to the A/V profiles of a specified device among the license components and the encrypted content components created by the rights object issuer 110 and the content issuer 120. Examples of such a home server 130 include a PVR (Personal Video Recorder), a PC, and so forth. Hereinafter, the features of the home server 130 will be described in detail with reference to FIG. 7.

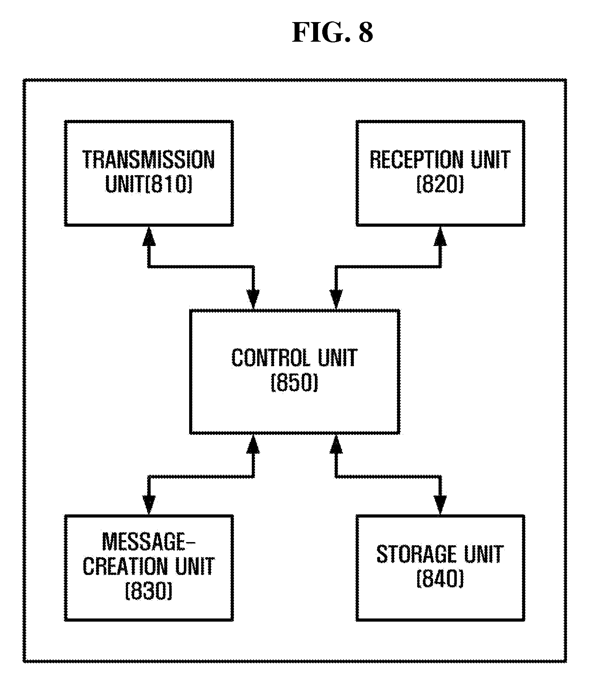

The portable device 140 is a device that receives the content object and the DRM license from the home server 130, and plays the content object by using the provided DRM license. The to-be-played content object can be acquired from the home server 130 or through another device or a network. It is also possible that the portable device 140 acquires the rights object through another device or a network. Examples of such a portable device 140 include a PMP (Portable Multimedia Player), a cellular phone, a PDA, an MP3 player, and so forth. Hereinafter, the features of the portable device 140 will be described in detail with reference to FIG. 8.

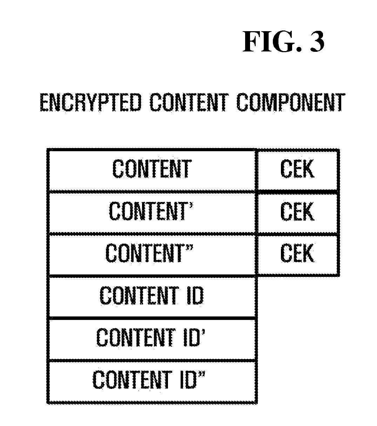

The content issuer 120 issues the content object. In an exemplary embodiment of the present invention, the content object is encrypted digital content. The digital content may be a movie, music, a photograph, a game, a document, and so forth. In addition, the content issuer 120 creates encrypted content components in consideration of all the A/V profiles supported by devices in the domain. Hereinafter, the creation of the encrypted content component will be described in detail with reference to FIG. 3.

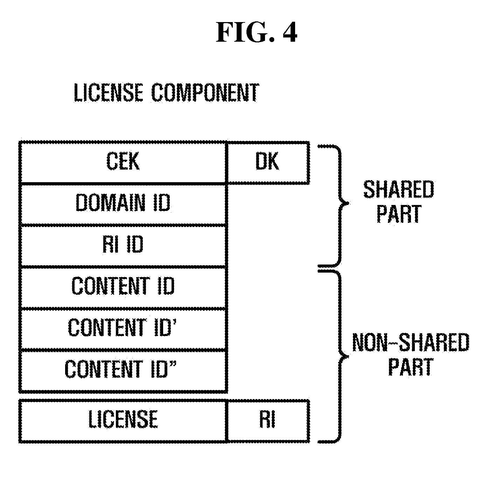

The rights object issuer 110 issues the rights object, and provides the rights object to a device (e.g., the home server 130 or the portable device 140) of a user who has paid the charges. In addition, the rights object issuer 110 creates the license components in consideration of all the A/V profiles supported by the devices in the domain, and provides the created license components to the home server 130. Hereinafter, the features of the license components will be described in detail with reference to FIG. 4.

The rights object is a type of license (i.e., DRM license) defining the rights to use the content object. The DRM license may include a content encryption key (CEK), permission information, constraint information, and content ID of the content object that can be decrypted using the content encryption key.

The content encryption key is a key that can be used to play the content object, and has a specified binary value. For example, the content encryption key is used to acquire the original digital content by decoding the content object.

The permission information is information that indicates a playback type of the content object and a copy type of the rights object.

Examples of such a playback type include play, display, execution, print, and so forth. Play means the right to express the content object in the form of an audio or a video. For example, if the content object is related to a moving image or music, play may be set as the permission information of the DRM license to be consumed in order to play the content object. Display means the right to express the content object in a visual device, and print means the right to create a hard copy of the content object. For example, if the content object is related to a still image, at least one of display and print is set as the permission information of the DRM license to be consumed in order to play the content object. Execution means the right to use the content object in the form of a game or another application program. For example, if the content object is related to a Java game, its execution is set as the permission information of the DRM license to be consumed in order to play the content object.

In contrast, examples of a copy type include copy and movement. Copy or movement is the right to store the DRM license, which is stored in a device, in another device. In the case of movement, the DRM license stored in the existing device is inactivated when the DRM is stored in another device, while in the case of copy, the DRM license stored in the existing device remains in an active state even if the DRM license is stored in another device. Here, inactivation may mean the deletion of the DRM license. The constraint information is information that indicates the limitation within which the content object can be played, and one or more constraint information may be set for the permission information. Examples of such constraint information include a count constraint, a datetime constraint, an interval constraint, and an accumulated constraint.

The above description of the content object and DRM license is exemplary, and thus the present invention is not limited thereto.

Referring to FIG. 2, the home server 130 and the portable device 140 may constitute a digital rights management domain (DRM domain). The DRM domain is a set of devices that can share the DRM license. For example, movement or copy of the DRM license is permitted among the devices in the same DRM domain. Hereinafter, the DRM license that can be shared among the devices in the DRM domain will be referred to as a domain DRM license.

The rights object issuer 110 manages the DRM domains. For example, the rights object issuer 110 creates DRM domains and controls subscription/secession of devices to/from the DRM domains. In one embodiment of the present invention, the DRM domain management work is based on the OMA (Open Mobile Alliance) DRM standard. Since detailed processes for the DRM domain management may be diversely implemented, the present invention is not limited to such DRM domain management methods or processes of the rights object issuer 110.

FIG. 3 is a view explaining a process in which a content issuer creates encrypted content components according to an embodiment of the present invention.

First, the content issuer 120 encodes the content by scalable video coding in consideration of all the A/V profiles. That is, the content issuer encodes the content for HD profiles, SD (Standard Definition) profiles, and portable profiles. Here, scalable video coding is a technique that makes it possible to perform a partial coding of one compressed bitstream so that the coded videos have diverse resolutions, picture qualities, and frame rates, and to perform an efficient signal representation and transmission in a changeable communication environment.

Then, the content issuer 120 classifies and encrypts the encoded content by profiles. Here, the content may be encrypted by a progressive encryption method, and in this case, the key used for the encryption is called a CEK (Content Encryption Key).

Then, the content issuer 120 divides the remaining part (i.e., metadata and so on) except for the content into a part that can be shared in the domain and a part required for each device, and constructs an encrypted content component together with the encrypted content.

Then, the content issuer 120 transmits the encrypted content component to the home server 130.

FIG. 4 is a view explaining a process in which a rights object issuer creates license components according to an embodiment of the present invention.

First, the rights object issuer 110 separately creates DRM licenses for the content of the respective profiles.

Then, the rights object issuer 110 performs a digital signature on the created DRM licenses by using a signature key S owned by the rights object issuer 110. Hereinafter, a process of creating a digital signature will be described.

First, the rights object issuer 110 creates DRM licenses for the respective devices. The created licenses are as follows.

$$M_1 = \text{domain ID}\|\text{RI ID}\|\text{E(CEK)}\|\text{content ID}$$

$$M_2 = \text{domain ID}\|\text{RI ID}\|\text{E(CEK)}\|\text{content ID'}$$

$$M_3 = \text{domain ID}\|\text{RI ID}\|\text{E(CEK)}\|\text{content ID''}$$

Here, $M_1$ denotes a license for an HD profile, $M_2$ denotes a license for an SD profile, and $M_3$ denotes a license for a portable profile.

That is, the license for the HD profile (e.g., $M_1$) includes a domain ID, RI ID, encrypted CEK, and content ID, and the license for the SD profile (e.g., $M_2$) includes a domain ID, RI ID, encrypted CEK, and content ID'. The license for the portable profile (e.g., $M_3$) includes a domain ID, RI ID, encrypted CEK, and content ID".

Then, the rights object issuer 110 performs a digital signature for the respective created DRM licenses. Here, for the digital signature, it is assumed that the following RSA algorithm (i.e., public key encryption algorithm) is required.

$$D := Z_N^* \; s.t. N = pq$$

$$\pi(X) = X^e \bmod N$$

$$\pi^{-1}(X) = X^d \bmod N \quad s.t \;\; e.d = 1 \bmod \phi(N)$$

$$trapdoor \;\; t := d$$

Here, D is a group having the * operation, H is the hash function: $H : \{0,1\}^* \to D$, and $\pi$ is a D-D mapping function, i.e., a trapdoor permutation having trapdoor t.

That is, the number of elements which are coprime to N among elements of a set $\{1, 2, ..., n\text{-}1\}$ is denoted by $\phi(N)$, which is called Euler's $\phi$-function. Particularly, with respect to a prime number p, $\phi(p) = p\text{-}1$ is materialized. In order to know the value of $\phi(N)$ with respect to a large integer N, the prime factorization of N is compulsory.

That is, if N is a product of p and q, $\phi(N)$ becomes $\phi(N) = (p\text{-}1)(q\text{-}1)$. Euler's theorem states that $a\phi(N) \equiv 1(\bmod N)$ whenever two positive integers $a$ and N are coprime to each other.

First, two large prime numbers $p$ and $q$ are selected as secret keys, N, defined by $N = pq$, is open to the public, and a certain integer e that is coprime to $\phi(N)$ is selected as a public key.

Then, $d$ that satisfies $ed \equiv 1(\bmod \phi(N))$ is calculated as a secret key through the

Euclidean algorithm. That is, $p, q,$ and d become secret keys, and N and e become public keys.

Then, $X^e$ is calculated using the public key $e,$ and is simplified by modular $N.$ That is, a cipher text $\pi(X)$ is given by:

$$\pi(X) = X^e \bmod N$$

Then, $X^d$ is calculated using the secret key d, and is simplified by modular N. A plain text $\pi^{-1}(X)$ is given by

$$\pi^{-1}(X) = X^d \bmod N \quad s.t \;\; e.d = 1 \bmod \phi(N)$$

Then, the digital signature is performed using the signature key S of the rights object issuer (RI). Here, the signature key is trapdoor t, and a verification key of the rights object issuer (RI) is trapdoor permutation $\pi$.

In contrast, the digital signature is given by

$$Signature \ \sigma = \pi^{-1}(H(M_1)^*\pi^{-1}(H(M_2)^*\pi^{-1}(H(M_3))))$$

That is, the hash of $M_3$ is calculated, and then $\pi^{-1}$ is performed ①. The hash of $M_2$ is calculated ②, the hashes of $M_3$ ① and $M_2$ ② are multiplied ③, and then $\pi^{-1}$ is performed ④. Then, the hash of $M_1$ is calculated ⑤, ④ and ⑤ are multiplied ⑥, and then $\pi^{-1}$ is performed ⑦.

Thereafter, verification is performed as follows.

*Check whether A unit of*

$$D = (H(M_3)^{-1*}\pi \ (H(M_2)^{-1*}\pi \ (H(M_1)^{-1*}\pi \ (\sigma))))$$

That is, the hash of $M_1$ is calculated, $^{-1}$ is performed ①, and then $\pi$ is performed ②.

Also, ② and $\pi(\sigma)$ are multiplied ③, the hash of $M_2$ is calculated, and $^{-1}$ is performed ④. Then, $\pi$ is performed ⑤, and ③ and ⑤ are multiplied ⑥. Thereafter, the hash of $M_3$ is calculated, $^{-1}$ is performed ⑦, and then ⑥ and ⑦ are multiplied ⑧.

Thereafter, the rights object issuer 110 divides the license component into a part that can be shared in the domain and a part required for each device, and creates the DRM license component along with the created digital signature. Here, the part that can be shared includes domain ID, rights object issuer (RI) ID, and CEK encrypted by domain key DK. The part required for the respective devices includes the content ID and license issued by the rights object issuer 110.

Then, the rights object issuer 110 transmits the license components to the home server.

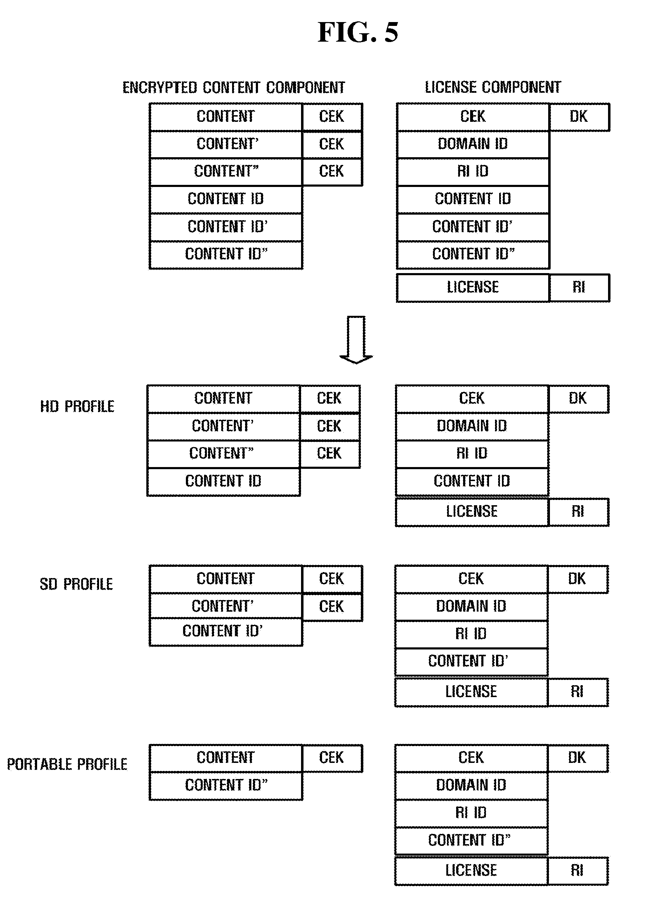

FIG. 5 is a view explaining a process in which a home server creates DRM licenses and encrypted content corresponding to profiles of respective devices according to an exemplary embodiment of the present invention.

As illustrated in FIG. 5, the home server 130 creates encrypted content object and a DRM license object by gathering elements that correspond to the HD profile from the license component and the encrypted content component downloaded from the rights object issuer 110 and the content issuer 120, respectively. Here, the encrypted content object of the HD profile includes a plurality of content (e.g., content, content', and content") encoded by scalable video coding in consideration of the HD profile, and content IDs, and the DRM license object includes CEK encrypted by domain key, domain ID, rights object issuer's (RI) ID, content IDs, and license encrypted by RI.

If the DRM license and encrypted content are requested from a device that supports the SD profile, the home server 130 creates the encrypted content object and the DRM license object by gathering the elements corresponding to the SD profile from the license component and the encrypted content component downloaded from the rights object issuer 110 and the content issuer 120. Here, the encrypted content object of the SD profile includes a plurality of content (e.g., content and content') encoded by scalable video coding in consideration of the SD profile, and content ID', and the DRM license object includes a CEK encrypted by domain key, a domain ID, a rights object issuer's (RI) ID, a content ID', and a license encrypted by RI.

If the DRM license and encrypted content are requested by a device that supports the portable profile, the home server 130 creates the encrypted content object and the DRM license object by gathering the elements corresponding to the portable profile from the license component and the encrypted content component downloaded from the rights object issuer 110 and the content issuer 120. Here, the encrypted content object of the portable profile includes the content encoded by scalable video coding in consideration of portable profile, and content ID", and the DRM license object includes a CEK encrypted by domain key, a domain ID, a rights object issuer's (RI) ID, a content ID", and a license encrypted by the RI.

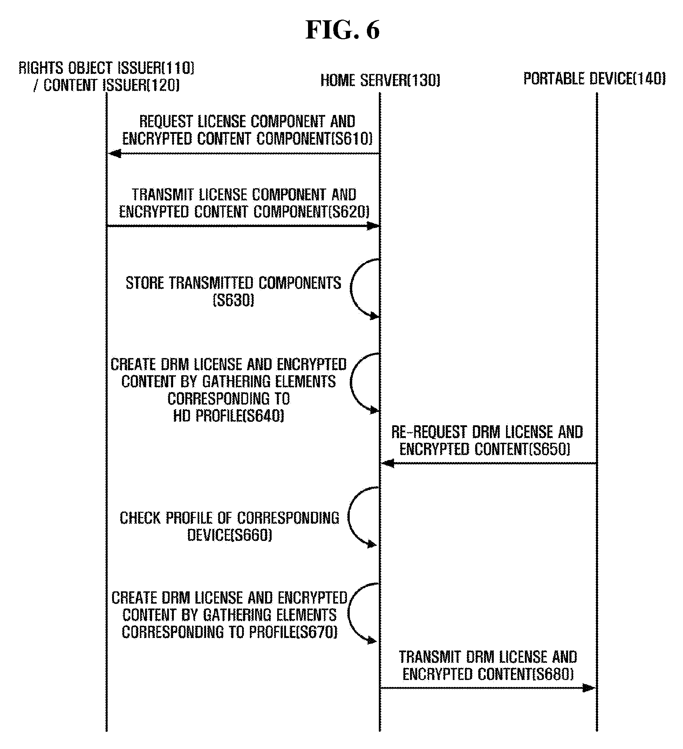

FIG. 6 is a flowchart illustrating a method of managing A/V profiles according to an embodiment of the present invention.

First, the home server 130 requests the download of the license component and the encrypted content component to the rights object issuer 110 and the content issuer 120 (S610). In response to this request, the rights object issuer 110 and the content issuer 120 transmit the license component and the encrypted content component to the home server (S620), and the home server 130 stores the transmitted license component and encrypted content component in the storage unit 750 (S630). Here, before the home server 130 requests the license component and the encrypted content component from the rights object issuer 110 and the content issuer 120, it authenticates that the content-purchase process has been completed and that it has the right to download the content.

Then, the home server 130 creates a DRM license and encrypted content by gathering elements that correspond to its own profile (i.e., HD profile) from the stored license component and encrypted content component (S640). Then, the home server 130 can play the encrypted content through a proper DRM license.

Thereafter, if the portable device 140 requests the DRM license and the encrypted content (S650), the home server 130 checks the profile of the device that has requested the DRM license and the encrypted content (S660).

Then, the home sever 130 creates a DRM license object and an encrypted content object by gathering elements that correspond to the checked profile (e.g., a portable profile) from the stored license component and the encrypted content component (S670).

Then, the home server 130 transmits the created DRM license object and encrypted content object to the portable device 140 (S680).

FIG. 7 is a block diagram illustrating an internal construction of a home server according to an embodiment of the present invention.

As illustrated in FIG. 7, the home server 130 includes a transmission unit 710, a reception unit 720, a content-component-management unit 730, a license-component-management unit 740, a storage unit 750, and a control unit 760.

The transmission unit 710 transmits DRM license, content, message, and other information to the portable device 140, and the reception unit 720 receives the DRM license, content, message, and other information from the rights object issuer 110, the content issuer 120, and the portable device 140. In FIG. 7, it is exemplified that the transmission unit 710 and the reception unit 720 are separate constituent elements. However, a single constituent element in which functions of the transmission unit 710 and the reception unit 720 are combined may be employed. The transmission unit 710 and the reception unit 720 can use wireless communication protocols such as a wireless LAN, wireless PAN, Bluetooth, and so forth, or a wire communication protocols such as PLC (Power Line Communication), IEEE 1394 (Institute of Electrical and Electronics Engineers 1394), USB (Universal Serial Bus), and so forth. It is also possible that the transmission unit 710 and the reception unit 720 use both wire communication protocols and wireless communication protocols.

The content-component-management unit 730 manages encrypted content components transmitted from the content issuer 120. That is, the content-component-management unit 730 creates the encrypted content objects that correspond to profiles of the respective devices.

For example, the content-component-management unit 730 creates encrypted content by gathering elements that correspond to an HD profile from the transmitted content component, and when the portable device 140 requests the encrypted content, it creates encrypted content object by gathering elements that correspond to a portable profile.

The license-component-management unit 740 manages the license components transmitted from the rights object issuer 110. That is, the license-component-management unit 740 creates the license objects that correspond to profiles of the respective devices.

The storage unit 750 stores the encrypted content components and license components transmitted from the rights object issuer 110 and the content issuer 120.

The control unit 760 controls the operation of the respective functional blocks 710 to 750 that constitute the home server 130.

FIG. 8 is a block diagram illustrating an internal construction of a portable device according to an embodiment of the present invention.

As illustrated in FIG. 8, the portable device 140 includes a transmission unit 810, a reception unit 820, a message-creation unit 830, a storage unit 840, and a control unit 850.

The transmission unit 810 transmits a message for requesting a DRM license and content to the home server 130, and the reception unit 820 receives the DRM license, content, message, and other information from the home server 130. In FIG. 8, it is exemplified that the transmission unit 810 and the reception unit 820 are separate constituent elements. However, a single constituent element in which functions of the transmission unit 810 and the reception unit 820 are combined may be employed.

The message-creation unit 830 creates a message for requesting the DRM license and encrypted content from the home server 130.

The storage unit 840 stores the encrypted content objects and license objects transmitted from the home server.

The control unit 850 controls the operation of the respective function blocks 810 to 840 that constitute the portable device 140.

As described above, the method, apparatus, and system for managing A/V profiles according to embodiments of the present invention produce one or more of the following effects.

In the case where devices that support different profiles coexist in a DRM domain, the message complexity between the home server and the content issuer or the rights object issuer, and the message complexity between the home server and the portable device can be reduced.

In addition, the waste of storage space when storing the encrypted content and DRM licenses stored in the home server can be eliminated.

In embodiments of the present invention, the term "unit", as used herein, means, but is not limited to, a software or hardware component, such as a Field Programmable Gate Array (FPGA) or Application Specific Integrated Circuit (ASIC), which performs certain tasks. A unit may advantageously be configured to reside on the addressable storage medium and configured to execute on one or more processors. Thus, a unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and units may be combined into fewer components and units or further separated into additional components and units.

Although a few embodiments of the present invention have been described for illustrative purposes, those skilled in the art will appreciate that various modifications, additions and substitutions are possible, without departing from the scope and spirit of the invention as disclosed in the accompanying claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of managing Audio/Video (A/V) profiles, comprising:

   requesting (S610) a license component and an encrypted content component; and
   creating (S640) a digital rights management (DRM) license and encrypted content by gathering elements that correspond to an A/V profile of a specified device from the license component and the encrypted content component.

2. The method of claim 1, wherein the license component comprises a content encryption key (CEK) encrypted by a domain key, a domain ID, a rights object issuer's ID (RI ID), a content ID, and a license.

3. The method of claim 2, wherein a digital signature is performed with respect to the license by using a signature key of the rights object issuer (RI), and is given by:

$$Signature \; \sigma = \pi^{-1}\left(H(M_1)^* \pi^{-1}\left(H(M_2)^* \pi^{-1}\left(H(M_3)\right)\right)\right) \; ;$$

   where $M_1$ denotes a license for a high definition (HD) profile, $M_2$ a license for a standard definition (SD) profile, $M_3$ a license for a portable profile, and H a hash function.

4. The method of any preceding claim, wherein the encrypted content component includes encoded encrypted content and a content ID of the encrypted content in consideration of all the A/V profiles supported by devices in a domain.

5. An apparatus for managing Audio/Video (A/V) profiles, comprising:

   a transmission unit (710) which requests a license component and an encrypted content component from a rights object issuer and a content issuer, respectively;
   a reception unit (720) which receives the license component and the encrypted content component transmitted in accordance with the request;
   a content-component-management unit (730) which creates encrypted content by gathering elements that correspond to an A/V profile of a specified device from the transmitted encrypted content component; and a license-component-management unit (740) which creates a digital rights management (DRM) license by gathering elements that correspond to the A/V profile of the specified device from the transmitted license component.

6. The apparatus of claim 5, wherein the license component is created by the rights object issuer, and includes a content encryption key (CEK) encrypted by a domain key, a domain ID, a rights object issuer's ID (RI ID), a content ID, and a license.

7. The apparatus of claim 6, wherein a digital signature is performed with respect to the license by using a signature key of the rights object issuer, and is given by:

$$Signature \ \sigma = \pi^{-1}\left(H(M_1)^* \pi^{-1}\left(H(M_2)^* \pi^{-1}\left(H(M_3)\right)\right)\right) \ ;$$

where M1 denotes a license for an high definition (HD) profile, M2 a license for a standard definition (SD) profile, M3 a license for a portable profile, and H a hash function.

8. The apparatus of claim 6 or 7, wherein the encrypted content component is created by the content issuer, and includes encoded encrypted content and a content ID of the encrypted content in consideration of all the A/V profiles supported by devices in a domain.

9. A system for managing Audio/Video (A/V) profiles, comprising:

a rights object issuer (110) which creates license components in consideration of all A/V profiles supported by devices in a domain;
a content issuer (120) which creates encrypted content components in consideration of all the A/V profiles supported by the devices in the domain; and
a home server (130) located in the domain and creating a digital rights management (DRM) license and encrypted content by gathering elements that correspond to an A/V profile of a specified device from the created license component and encrypted content component.

10. The system of claim 9, further comprising a portable device (140) located in the domain, and requesting the DRM license and the encrypted content from the home server.

11. The system of claim 9 or 10, wherein the license component includes a content encryption key (CEK) encrypted by a domain key, a domain ID, a rights object issuer's ID (RI ID), a content ID, and a license.

12. The system of any of claims 9-11, wherein a digital signature is performed with respect to the license by using a signature key of the rights object issuer, and is given by:

$$Signature \ \sigma = \pi^{-1}\left(H(M_1)^* \pi^{-1}\left(H(M_2)^* \pi^{-1}\left(H(M_3)\right)\right)\right) \ ;$$

where $M_1$ denotes a license for a high definition (HD) profile, $M_2$ a license for a standard definition (SD) profile, $M_3$ a license for a portable profile, and H a hash function.

13. The system of any of claims 9-12, wherein the encrypted content component includes encoded encrypted content and a content ID of the encrypted content in consideration of all the A/V profiles supported by devices in the domain.

# FIG. 1 (RELATED ART)

RIGHTS OBJECT ISSUER
10

CONTENT ISSUER
20

| ENCRYPTED CONTENT |
| --- |
| DRM LICENSE |

HD PROFILE

| ENCRYPTED CONTENT |
| --- |
| DRM LICENSE |

SD PROFILE

| ENCRYPTED CONTENT |
| --- |
| DRM LICENSE |

PORTABLE PROFILE

HOME SERVER
30

PORTABLE DEVICE
40

# FIG. 2

# FIG. 3

ENCRYPTED CONTENT COMPONENT

| | |
|---|---|
| CONTENT | CEK |
| CONTENT' | CEK |
| CONTENT" | CEK |
| CONTENT ID | |
| CONTENT ID' | |
| CONTENT ID" | |

# FIG. 4

LICENSE COMPONENT

| CEK | DK |
|---|---|
| DOMAIN ID | |
| RI ID | |
| CONTENT ID | |
| CONTENT ID' | |
| CONTENT ID" | |
| LICENSE | RI |

SHARED PART

NON-SHARED PART

# FIG. 5

ENCRYPTED CONTENT COMPONENT

LICENSE COMPONENT

| CONTENT | CEK |
|---|---|
| CONTENT' | CEK |
| CONTENT'' | CEK |
| CONTENT ID | |
| CONTENT ID' | |
| CONTENT ID'' | |

| CEK | DK |
|---|---|
| DOMAIN ID | |
| RI ID | |
| CONTENT ID | |
| CONTENT ID' | |
| CONTENT ID'' | |

| LICENSE | RI |
|---|---|

HD PROFILE

| CONTENT | CEK |
|---|---|
| CONTENT' | CEK |
| CONTENT'' | CEK |
| CONTENT ID | |

| CEK | DK |
|---|---|
| DOMAIN ID | |
| RI ID | |
| CONTENT ID | |

| LICENSE | RI |
|---|---|

SD PROFILE

| CONTENT | CEK |
|---|---|
| CONTENT' | CEK |
| CONTENT ID' | |

| CEK | DK |
|---|---|
| DOMAIN ID | |
| RI ID | |
| CONTENT ID' | |

| LICENSE | RI |
|---|---|

PORTABLE PROFILE

| CONTENT | CEK |
|---|---|
| CONTENT ID'' | |

| CEK | DK |
|---|---|
| DOMAIN ID | |
| RI ID | |
| CONTENT ID'' | |

| LICENSE | RI |
|---|---|

# FIG. 6

RIGHTS OBJECT ISSUER(110)
/ CONTENT ISSUER(120)　　　　　　　HOME SERVER(130)　　　　　　　PORTABLE DEVICE(140)

REQUEST LICENSE COMPONENT AND
ENCRYPTED CONTENT COMPONENT(S610)

TRANSMIT LICENSE COMPONENT AND
ENCRYPTED CONTENT COMPONENT(S620)

STORE TRANSMITTED COMPONENTS
(S630)

CREATE DRM LICENSE AND ENCRYPTED
CONTENT BY GATHERING ELEMENTS
CORRESPONDING TO
HD PROFILE(S640)

RE-REQUEST DRM LICENSE AND
ENCRYPTED CONTENT(S650)

CHECK PROFILE OF CORRESPONDING
DEVICE(S660)

CREATE DRM LICENSE AND ENCRYPTED
CONTENT BY GATHERING ELEMENTS
CORRESPONDING TO PROFILE(S670)

TRANSMIT DRM LICENSE AND
ENCRYPTED CONTENT(S680)

# FIG. 7

```
┌─────────────────────────────────────────────────────────────────────┐
│                                                                       │
│   ┌──────────────────┐              ┌──────────────────┐              │
│   │  TRANSMISSION    │              │    RECEPTION     │              │
│   │  UNIT(710)       │              │    UNIT(720)     │              │
│   └──────────────────┘              └──────────────────┘              │
│                                                                       │
│                   ┌──────────────────┐         ┌──────────────────┐   │
│                   │  CONTROL UNIT    │◄───────►│  STORAGE UNIT    │   │
│                   │     (760)        │         │     (750)        │   │
│                   └──────────────────┘         └──────────────────┘   │
│                                                                       │
│   ┌──────────────────┐              ┌──────────────────┐              │
│   │ CONTENT-COMPONENT│              │ LICENSE-COMPONENT│              │
│   │  -MANAGEMENT     │              │  -MANAGEMENT     │              │
│   │  UNIT(730)       │              │  UNIT(740)       │              │
│   └──────────────────┘              └──────────────────┘              │
│                                                                       │
└─────────────────────────────────────────────────────────────────────┘
```

# FIG. 8

| | |
|---|---|
| TRANSMISSION UNIT[810] | RECEPTION UNIT [820] |

CONTROL UNIT [850]

| | |
|---|---|
| MESSAGE-CREATION UNIT [830] | STORAGE UNIT [840] |